# EUROPEAN PATENT SPECIFICATION

(11) **EP 1 459 535 B1**
(45) Date of publication and mention of the grant of the patent: **04.10.2006**
(21) Application number: 02805860.0
(22) Date of filing: 12.12.2002
(51) Int. Cl.: H04N 7/10, H04N 7/16, H04B 10/00, H04B 10/12, H04N 7/173

(54) **HYBRID FIBER OPTIC AND COAXIAL CABLE NETWORK NODE THAT CONTAINS A CABLE MODEM TERMINATION SYSTEM**
HYBRIDER FASEROPTISCHER UND KOAXIALKABELNETZWERKKNOTEN MIT EINEM KABELMODEMABSCHLUSSSYSTEM
NOEUD DE RESEAU HYBRIDE A FIBRE OPTIQUE ET CABLE COAXIAL QUI CONTIENT UN SYSTEME DE RACCORDEMENT DE MODEM CABLE

(30) Priority: 27.12.2001 US 29810
(43) Date of publication of application: 22.09.2004
(73) Proprietor: BROADBAND ROYALTY CORPORATION, Wilmington, Delaware 19801 (US)
(72) Inventor: STAIGER, John, J., NL-5656 AA Eindhoven (NL)
(74) Representative: Schmidt, Steffen J.
(86) International application number: PCT/IB2002/005394
(87) International publication number: WO 2003/056820

(56) References cited:
- WO-A-01/17168
- WO-A-01/45305
- WO-A-02/061979
- US-A- 6 100 883
- "DATA-OVER-CABLE SERVICE INTERFACE SPECIFICATION" RADIO FREQUENCY INTERFACE SPECIFICATION. SP-RFI-I04-980724, XX, XX, 1997, pages i-xii,1-195, XP002167715

## Description

The present invention relates to data communication systems, and more particularly to high speed broadband data communication delivered via multi-channel shared cable television (CATV) systems.

Data communication systems, such as cable television systems, are well known. A typical cable television (CATV) systems is comprised of a physical entity at a central location known as a headend, with one or more trunk lines extending therefrom. Each trunk line has a plurality of feeder lines extending therefrom into subscriber areas, where each subscriber is attached via a line tap onto the feeder or service line. If the distances between the headend and subscriber areas are substantial, intervening distribution hubs may be located along the trunk lines to replenish the strength and quality of the signal being provided to subscribers.

The trunk, feeder and service lines of many existing CATV systems are all coaxial cables. Since the signals carried by these coaxial cables are electrical, these systems are susceptible to electrical and magnetic noise from natural phenomenon as well as other electrical and magnetic sources. In order to improve the clarity of the signals carried over a CATV system, the coaxial cables used for trunk and feeder lines are being replaced by fiber optic cables. Fiber optic cables carry light signals which are inherently less susceptible to electrical and electromagnetic noise from external sources. In addition, fiber optic cables carry signals for longer distances without appreciable signal strength loss than coaxial cable. However, the cost of replacing existing coaxial cables with fiber optic cables prevents many companies from converting their service lines to fiber optic cables. CATV systems having both fiber optic trunk and feeder lines along with coaxial service lines are typically called hybrid fiber cable (HFC) systems. In HFC systems, the service sites where the light signal from a fiber optic cable is converted to an electrical signal for a coaxial service line is called a fiber conversion node, fiber node, or simply a node.

The utilization of high speed data services over all-coaxial or HFC systems has recently included implementation of headend controllers known as Cable Modem Termination Systems (CMTSs). A CMTS standard is defined in the Data Over Cable Service Interface Specification (DOCSIS) published by Cable Television Laboratories (incorporated herein by reference). A CMTS is described in this document as being normally embodied as a physical entity at a central location, e.g., the system's headend. However, widespread use of this system architecture has produced unforeseen and challenging system engineering issues when new services are deployed within HFC systems. For example, having the entire functionality of the CMTS at the one headend location means that passive return paths are not possible with these existing systems.

In a CATV system, passive return paths are desirable because they provide the Inherent benefits of, inter alia, reduced cost of return path hardware, since return path amplifiers are not required; return path loss improvements; increased system reliability; increased return path capacity; improved noise funneling; decreased cost of return path optical transmitters; and the capability of carrying forward and return signals on a single fiber optic cable.

References of possible interest in the field of CATV include U.S. Pat. No. 6,100,883, WO 01/45305 A, WO 01/17168 A and WO 02/061979 A.

U.S. Pat. No. 6,100,883 describes an interactive television information system that is coupled to a cable television system having a headend for supplying information services and an information service distribution network for delivering information services to subscriber televisions. With this arrangement, each subscriber television is associated with a home interface controller. The home interface controllers receive the television information signals and include a data transceiver for data communications. A subscriber selection device associated with a home interface controller permits subscriber Interaction through the data transceiver with an assigned interactive controller from a plurality of interactive controllers. The assigned interactive controller is in communication with the information sources and in television communication with its assigned home interface controller. Selection of an information source is made through channel selection of an apparent channel from any of a first group of apparent channels and a second group of apparent channels. Different information services on different apparent channels from the first group of apparent channels are provided to a given home interface controller via the same television information signal as the subscriber changes channel selection from one of the apparent channels in the first group of apparent channels to another apparent channel in the first group of apparent channels. To receive apparent channels from the second group of apparent channels, a home interface controller selects the television information signal at its input corresponding to the selected channel.

WO 01/45305 A relates to an optical distribution node that indudes a laser transceiver that may be coupled to at least one fiber optic link. The optical distribution node communicates upstream and downstream digital data with the head end over the at least one fiber optic link. The optical distribution node further indudes a data concentrator coupled to the laser transceiver. Further, for each of at least one coaxial cable link, the optical distribution node indudes a frequency translator and a node modem. The frequency translator receives and translates the upstream digital data from modems on the at least one coaxial cable link to a different carrier to provide a signal to the modems on the at least one coaxial cable link for collision detection. The node modem is coupled between the coaxial cable link and the data concentrator. The node modem demodulates upstream digital data for the data concentrator and modulates downstream digital data for transmission over the coaxial cable link.

WO 01/17168 A pertains to an arrangement in which upstream requests such a bandwidth request, are processed by a cable modem termination system (CMTS) out of order on a priority basis to reduce latency in responding to the request. With this configuration, CMTS is connected to a plurality of cable modems by a cable plant The CMTS has a burst receiver adapted to be connected to the cable plant to process upstream data packet units and bandwidth requests transmitted by the cable modems. Each packet indudes a header that uniquely distinguishes the bandwidth requests from other data types. Packet data units are arranged in a first memory queue. Bandwidth requests are arranged in a second memory queue. The headers of the packets processed by the burst receiver are inspected as they arrive at the CMTS to determine if the packets are packet data units or bandwidth requests. Packet data units are routed to the first memory queue. Bandwidth requests are routed to the second memory queue. Bandwidth allocation MAP messages are generated from the bandwidth requests stored in the second queue and transmitted downstream to the cable modems. The packet data units stored in the first queue are coupled to a data output for further distribution.

WO 02/061979 A describes a hybrid fiber-coax network having a head end and at least one fiber node in two-way communication therewith. With this network, a cable modem is located within the fiber node that provides a communication channel. The communication channel is adapted to transmit at least one informational signal that is indicative of a condition of the fiber node to the head end and is adapted to receive at least one control signal from the head end.

### SUMMARY OF THE INVENTION

In a first embodiment, the invention provides a data communication system comprising: a headend for generating a transmission signal for transmission to a plurality of subscriber sites and for processing return signals from the subscriber sites; a plurality of distribution hubs operationally coupled to said headend; a plurality of fiber nodes operationally coupled to at least one of said distribution hubs; a plurality of service lines operationally coupled between at least one of said fiber nodes and the plurality of subscriber sites, wherein the hubs, fiber nodes and services lines transmit the transmission signal from the headend to the plurality of subscriber sites and transmit the return signals from subscriber sites to the headend along at least one return path. The data communication system also includes a cable modem termination functional unit or package operationally coupled along the at least one return path to either a hub, a fiber node or a service line. The cable modem termination functional unit comprises at least one receiver configured to receive a plurality of return signals generated by the plurality of subscriber sites; at least one signal demodulator configured to demodulate the plurality of received signals into an equal plurality of baseband digital signals; a time division multiplexor circuit configured to multiplex the plurality of baseband digital signals to form one serial digital bit stream; and a transmitter configured to transmit the digital bit stream toward the headend along the at least one return path. Typically, the transmission signal includes a cable television (CATV) signal.

In a second embodiment, the invention provides a method for use by a cable modem termination functional unit or package within a data communication system having a headend for generating a transmission signal for transmission to a plurality of subscriber sites and for processing return signals from the subscriber sites, a plurality of distribution hubs operationally coupled to said headend, a plurality of fiber nodes operationally coupled to at least one of said distribution hubs, a plurality of service lines operationally coupled between at least one of said fiber nodes and the plurality of subscriber sites, wherein the hubs, fiber nodes and services lines transmit the transmission signal from the headend to the plurality of subscriber sites and transmit the return signals from subscriber sites to the headend along at least one return path. The method comprises the steps of: receiving a plurality of return signals generated by the plurality of subscriber sites; demodulating the plurality of received signals into an equal plurality of baseband digital signals; time division multiplexing the plurality of baseband digital signals to form one serial digital bit stream; and transmitting the digital bit stream toward the headend along the at least one return path.

In a third embodiment, the invention provides a cable modem termination functional unit or package for use with a data communication system interconnecting a headend and a plurality of subscriber sites. The cable modem termination functional unit is operationally coupled along return paths between the headend and the plurality of subscriber sites. The cable modem termination functional unit comprises at least one receiver configured to receive a plurality of return signals generated by the plurality of subscriber sites; at least one signal demodulator configured to demodulate the plurality of received signals into an equal plurality of baseband digital signals; a time division multiplexor circuit configured to multiplex the plurality of baseband digital signals to form one serial digital bit stream; and a transmitter configured to transmit the digital bit stream toward the headend along the at least one return path.

Hence, in at least some embodiments, the invention improves the performance of a HFC CATV system by dividing the functionality of the CMTSs and distributing this functionality throughout the network. This approach effectively provides passive return paths and their associated benefits. CMTS functionality is split so that a certain CMTS functionality is locate at the system's headend, and the remaining functionality is distributed around the HFC CATV system and is contained in the optical/electrical conversion, or fiber, nodes.

### BRIEF DESCRIPTION OF THE DRAWINGS

The exemplary embodiments of this invention will be described in detail, with reference to the accompanying figures, wherein like designations denote like elements, and wherein:
FIG. 1 is a diagram illustrating an exemplary embodiment of a data communication system of the present invention;
FIG. 2 is a diagram illustrating an exemplary embodiment of a fiber node of the present invention;
FIG. 3 is a diagram illustrating a CMTP of an exemplary embodiment of the present invention; and
FIG. 4 is a diagram illustrating a flow diagram of the signal processing steps occurring in a CMTP in an exemplary embodiment of the present invention.

### DETAILED DESCRIPTION OF EXEMPLARY EMBODIMENTS

The following is a detailed explanation of the method and system for a data communication system which utilizes Cable Modem Termination Systems (CMTSs), and which provides for passive return paths. The inventive data communication system of the present invention divides the functionality of the CMTS into functional units, hereinafter known as Cable Modem Termination Packages (CMTPs), and distributes the CMTPs to various points within the overall data communication system.

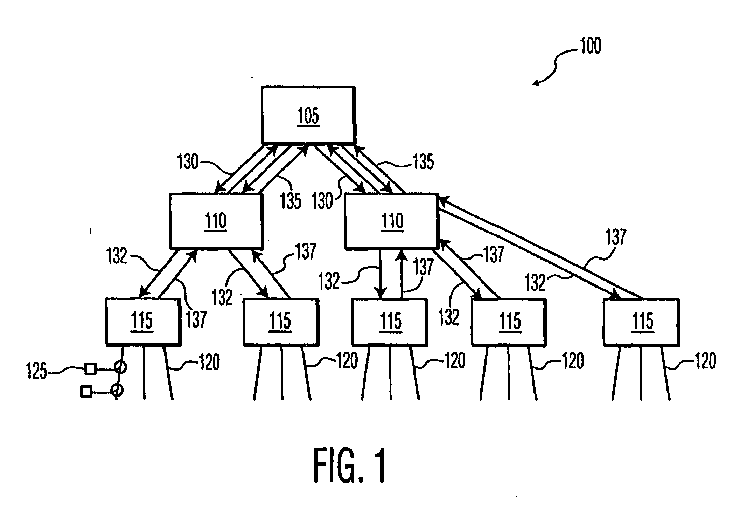

Referring to Fig. 1, a diagram of a data communication system according to the present invention is shown. Data communication system 100 comprises a headend 105, a plurality of distribution hubs 110 coupled to the headend 105, and a plurality of fiber nodes 115 coupled to the distribution hubs 110. Each fiber node 115 is coupled to one or more service lines 120 to which a plurality of service subscribers are coupled through subscriber taps 125. Coupling each fiber node 115 to a corresponding distribution hub 110 is a transmission cable 132 and a receive cable 137. These transmission cables 132, 137 are typically fiber optic cables, while service lines 120 are typically coaxial cables. The optical transmission system 100 of the present invention may employ either Wavelength Division Multiplexing (WDM) or Dense Wavelength Division Multiplexing (DWDM), or both technologies.

The term "fiber node" is commonly used to describe a service site or similar component wherein signals carried by fiber optic cables from a higher level are converted to electrical signals (*e.g*., RF signals) for transmission along coaxial cables. Each fiber node 115 connected to a distribution hub 110 has its own transmission cable 132 and receive cable 137 to couple the fiber node 115 to the distribution hub 110. Headend 105 is similarly coupled to each distribution hub 110 by transmission cables 130 and receive cables 135.

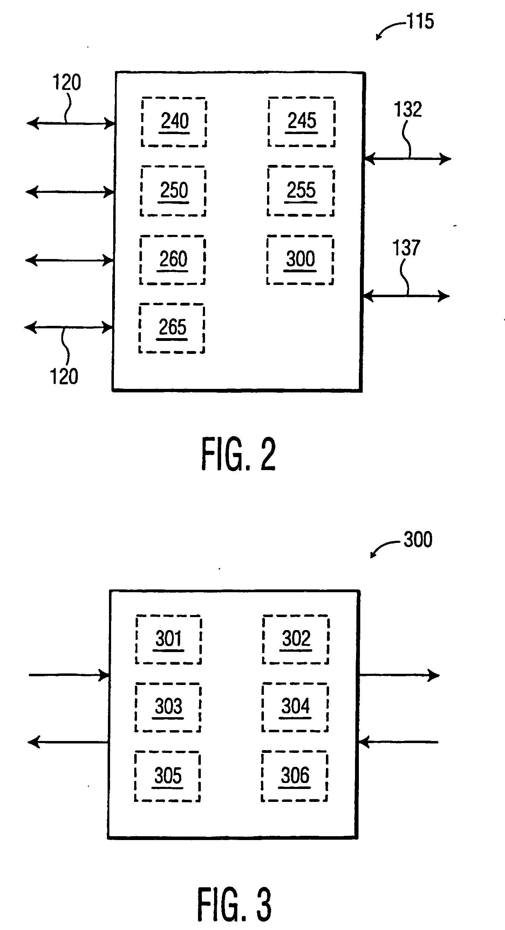

Referring to Fig. 2, each fiber node 115 commonly includes one or more optical converters 240, wherein the electrical signals received on coaxial cables 120 are converted into optical signals for transmission to a distribution hub 110 along upstream fiber optic cables 137. Similarly, optical signals received via upstream fiber optic cable 132 are processed by additional optical converters 245 into electrical signals for transmission along coaxial cables 120. The optical signals are also processed as necessary with optical multiplexor 260 and an optical demultiplexor 265.

Fiber node 115 may also include a wavelength stabilized source 250, an oscillator 255, an optical multiplexor 260, and an optical demultiplexor 265. The wavelength stabilized source 250 is useful for providing additional processing of the wavelengths of the optical signals before the signals are transmitted on the upstream fiber optic cable 137. The oscillator 255 is also used to process signals for transmission on the fiber optic cables.

According to the present invention, each fiber node 115 also contains a cable modem termination package (CMTP) 300, as shown in detail in Fig. 3. The CMTP may include, *inter alia,* electronic devices, optical devices, microprocessors, and related operational software. For instance, use of optical devices such as, *inter alia,* optical transmitters is desirable since the optical transmitters of digital signals need not have linear performance characteristics. Therefore a significantly lower cost optical transmitter can be used. The CMTP also includes a demodulator circuit 301, a multiplexor circuit 302, a demultiplexor circuit 303, at least one optical transmitter 304, at least one optical receiver 305, and connection devices 306 for operationally connecting said cable termination package to a data communication package.

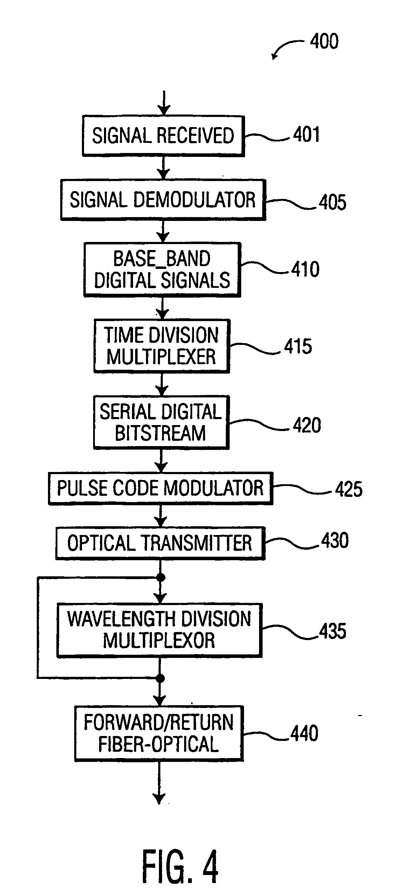

Referring now to Fig. 4, a flow diagram 400 of the signal processing steps occurring in a CMTP is illustrated. Data signals, from each of the return paths 120 (see Fig. 2), are received at an optical receiver in an initial step 401. These signals are processed in a signal demodulator step 405 so that their frequencies are demodulated to their baseband digital signals. These baseband digital signals 410 are then processed by a time division multiplexor circuit 415 to form one serial digital bit stream 420. The serial digital bit stream 420 is processed in a pulse code modulator circuit 425, and is then fed to an optical transmitter 430 on a different signal wavelength than that of the signal wavelength being carried by the fiber optic cable 440. Alternatively, a wavelength division multiplexer circuit 435 can be employed to mix the return optical signal for transmission on the same fiber optic cable as that which carries the forward signals.

The embodiment of the present invention as described herein makes possible a passive return path, since the input signal level required by the presence of the CMTP 300 in the fiber node 115 is lower (*e.g.*, 20 to 30 dB lower) than that required for a fiber node not having the CMTS functions embodied in a CMTP in that node. A derivative feature of this decreased input signal level is that the quantity of signal amplifiers in the return path may be reduced, or the signal amplifiers may be eliminated entirely. A second derivative feature of this feature is that the reduction in, or lack of, return path signal amplifiers results in lower equipment costs for the overall data communication system. Similarly, hardware maintenance expenses are reduced due to the decreased amount of hardware. The decreased amount of hardware also yields increased system reliability, since each piece of hardware that is removed also removes a potential point of failure.

Another improvement provided by the present invention relates to an increase in the signal carrying capacity of the return path. Known HFC fiber nodes typically have four return path inputs that are combined into a single signal for transmission upstream towards the headend. In such a case, the frequency of the return signals from each of the four individual return paths cannot be duplicated. However, the present invention allows the utilization of the frequencies on each of the return paths. Therefore, if there are, for example, four return paths to a particular fiber node, this invention provides an increase of four times the signal carrying capacity for transmitting data signals back upstream towards the headend.

Another benefit resulting from the above feature is related to external noise (e.g., thermal noise and ingress noise). In the related art, when four return paths are combined into a single return path, the noise level is additive. This represents the phenomenon known as noise funneling. In noise funneling, therefore, the noise worsens by a factor of four. In the present invention, each return path is kept separate, so that noise funneling cannot occur.

An additional feature of the present invention is directed towards making larger node serving areas practical. Without the inventive concept of the present invention, the node serving areas are limited because of the noise accumulation effects *(i.e.,* noise funneling) and the limited return path carrying capacity. Since the present inventive concept reduces the noise accumulation by a factor of four, and simultaneously increases the traffic capacity by a factor of four, it follows that the node serving area may be increased by four times.

Although certain exemplary embodiments of the present invention have been shown and described in detail, it should be understood that various changes and modifications may be made without departing from the scope of the present invention. The scope of the present invention will in no way be limited to the number of constituting components, the materials thereof, the shapes thereof, the relative arrangement thereof, etc., and are disclosed simply as an example of the exemplary embodiments.

## Claims

1. A data communication system (100) comprising:
a headend (105) for generating a transmission signal for transmission to a plurality of subscriber sites (125) and for processing return signals from the subscriber sites (125);
a plurality of distribution hubs (110) operationally coupled to said headend (105);
a plurality of fiber nodes (115) operationally coupled to at least one of said distribution hubs (110);
a plurality of service lines (120) operational coupled between at least one of said fiber nodes (115) and the plurality of subscriber sites (125), wherein the hubs (110), fiber nodes (115) and services lines (120) transmit the transmission signal from the headend (105) to the plurality of subscriber sites (125) and transmit the return signals from subscriber sites (125) to the headend (105) along at least one return path; and
a cable modem termination functional unit (300) operationally coupled along the at least one return path to either a hub (110), a fiber node (115) or a service line (120), the cable modem termination functional unit (300) comprising
at least one receiver (305) configured to receive a plurality of return signals generated by the plurality of subscriber sites (125);
at least one signal demodulator (405) configured to demodulate the plurality of received signals into an equal plurality of baseband digital signals;
a time division multiplexor circuit (415) configured to multiplex the plurality of baseband digital signals to form one serial digital bit stream (420); and
a transmitter (430) configured to transmit the digital bit stream toward the headend (105) along the at least one return path.

2. The system (100) of claim 1, wherein said transmission signal indudes a cable television (CATV) signal.

3. The system (100) of claims 1 or 2, wherein said cable modem termination functional unit (300) is operationally coupled to one of said distribution hubs (110).

4. The system (100) of claims 1 or 2, wherein said cable modem termination functional unit (300) is operationally coupled to one of said fiber nodes (115).

5. The system (100) of daims 1 or 2, wherein said cable modem termination functional unit (300) is operationally coupled to one of said service lines (120).

6. The system (100) of any of the preceding daims, wherein said headend (105), said hubs (110) and said fiber nodes (115) are operationally coupled to one another by fiber optic cables.

7. The system (100) of any of the preceding claims, wherein said service lines (120) are coaxial cables so that the fiber nodes (115) and the subscriber sites (125) are operationally coupled by coaxial cables.

8. The system (100) of any of the preceding daims, wherein a plurality of cable modem termination functional units (300) are provided, with at least one unit provided along each of a plurality of return paths from the plurality of subscriber sites (125) to the headend (105).

9. The system (100) of any of the preceding claims, further including a pulse code modulator (425) for modulating the serial bit stream prior to transmission via transmitter (430).

10. The system (100) of any of the preceding claims, further including a wavelength division multiplexor circuit (435) for mixing the serial bit stream prior to transmission via transmitter (430).

11. The system (100) of any of the preceding claims, wherein the at least one receiver (305) is an optical receiver configured to receive a plurality of optical return signals generated by the plurality of subscriber sites (125).

12. The system (100) of any of daims 1- 10, wherein the at least one receiver (305) is a coaxial signal receiver configured to receive a plurality of electrical return signals generated by the plurality of subscriber sites (125).

13. The system (100) of any of the preceding claims, wherein the transmitter (430) is an optical transmitter configured to transmit the digital bit stream as an optical signal on a fiber optical cable toward the headend (105).

14. The system (100) of daim 13, wherein the fiber optical cable also carries the transmission signal generated by the headend (105), and wherein the optical transmitter is configured to transmit the digital bit stream at a different signal wavelength than that of the transmission signal being carried by fiber optical cable.

15. A method (400) for use by a cable modem termination functional unit (300) within a data communication system (100) having a headend (105) for generating a transmission signal for transmission to a plurality of subscriber sites (125) and for processing return signals from the subscriber sites (125), a plurality of distribution hubs (110) operationally coupled to said headend (105), a plurality of fiber nodes (115) operationally coupled to at least one of said distribution hubs (110), a plurality of service lines (120) operationally coupled between at least one of said fiber nodes (115) and the plurality of subscriber sites (125), wherein the hubs (110), fiber nodes (115) and services lines (120) transmit the transmission signal from the headend (105) to the plurality of subscriber sites (125) and transmit the return signals from subscriber sites (125) to the headend (105) along at least one return path, said method comprising:
receiving (401) a plurality of return signals generated by the plurality of subscriber sites (125);
demodulating (405) the plurality of received signals into an equal plurality of baseband digital signals;
time division multiplexing (415) the plurality of baseband digital signals to form one serial digital bit stream (420); and
transmitting (430) the digital bit stream (420) toward the headend (105) along the at least one return path.

16. The method (400) of daim 15, further induding the initial step of transmitting a cable television (CATV) signal from the headend (105) to the subscriber sites (125).

17. The method (400) of claims 15 or 16, wherein said cable modem termination functional unit (300) is operationally coupled to one of said distribution hubs (110), and wherein the step of transmitting the digital bit stream (420) toward the headend (105) along the at least one return path is performed to transmit the bit stream (420) from the distribution hub (110) to the headend (105).

18. The method (400) of claims 15 or 16, wherein said cable modem termination functional unit (300) is operationally coupled to one of said fiber nodes (115), and wherein the step of transmitting the digital bit stream (420) toward the headend (105) along the at least one return path is performed to transmit the bit stream (420) from the fiber node (115) to a corresponding distribution head (110).

19. The method (400) of claims 15 or 16, wherein said cable modem termination functional unit (300) is operationally coupled to one of said service lines (120), and wherein the step of transmitting the digital bit stream (420) toward the headend (105) along the at least one return path is performed to transmit the bit stream (420) from the service line (120) to a corresponding fiber node (115).

20. The method (400) of any of claims 15 to 19, wherein said headend (105), said hubs (110) and said fiber nodes (115) are operationally coupled to one another by fiber optic cables, and wherein the step of transmitting the digital bit stream (420) toward the headend (105) is performed to transmit the bit stream as an optical signal on the fiber optic cables.

21. The method (400) of any of claims 15 to 20, wherein said service lines (120) are coaxial cables so that the fiber nodes (115) and the subscriber sites (125) are operationally coupled by coaxial cables, and wherein the step of receiving a plurality of return signals generated by the plurality of subscriber sites is performed to receive the signals over the coaxial cable.

22. The method (400) of any of claims 15 to 21, further including the step of pulse code modulating (425) the serial bit stream prior to the step of transmitting (430) the digital bit stream (420) toward the headend (105).

23. The method (400) of any of claims 15 to 22, further including the step of wavelength division mixing the serial bit stream prior to the step of transmitting (430) the digital bit stream (420) toward the headend (105).

24. The method (400) of any of claims 15 to 23, wherein the at least one receiver (305) is an optical receiver, and wherein the step of receiving (401) the plurality of return signals is performed to receive a plurality of optical return signals generated by the plurality of subscriber sites (125).

25. The method (400) of any of claims 15 to 23, wherein the at least one receiver (305) is a coaxial receiver, and wherein the step of receiving (401) the plurality of return signals is performed to receive a plurality of electrical return signals generated by the plurality of subscriber sites (125).

26. The method (400) of any of claims 15 to 25, wherein the transmitter (430) is an optical transmitter, and wherein the step of transmitting (430) the digital bit stream (420) toward the headend (105) is performed to transmit the digital bit stream as an optical signal on a fiber optical cable toward the headend (105).

27. The method (400) of claim 26, wherein the fiber optical cable also carries the transmission signal generated by the headend (105), and wherein the step of transmitting (430) the digital bit stream (420) toward the headend (105) is performed to transmit the digital bit stream at a different signal wavelength than that of the transmission signal being carried by fiber optical cable.

28. A cable modem termination functional unit (300) for use with a data communication system (100) interconnecting a headend (105) and a plurality of subscriber sites (125), the cable modem termination functional unit (300) operationally coupled along return paths between the headend (105) and the plurality of subscriber sites (125), the cable modem termination functional unit (300) comprising
at least one receiver (305) configured to receive a plurality of return signals generated by the plurality of subscriber sites (125);
at least one signal demodulator (405) configured to demodulate the plurality of received signals into an equal plurality of baseband digital signals;
a time division multiplexor circuit (415) configured to multiplex the plurality of baseband digital signals to form one serial digital bit stream (420); and
a transmitter (430) configured to transmit the digital bit stream toward the headend (105) along the at least one return path.

29. The cable modem termination functional unit (300) of daim 28, wherein a plurality of cable modem termination functional units (300) are provided, with at least one unit provided along each of a plurality of return paths from the plurality of subscriber sites (125) to the headend (105).

30. The cable modem termination functional unit (300) of claims 28 or 29, further including a pulse code modulator (425) for modulating the serial bit stream prior to transmission via transmitter (430).

31. The cable modem termination functional unit (300) of any of claims 28 to 30, further including a wavelength division multiplexor circuit (435) for mixing the serial bit stream prior to transmission via transmitter (430).

32. The cable modem termination functional unit (300) of any of claims. 28 to 31, wherein the at least one receiver (305) is an optical receiver configured to receive a plurality of optical return signals generated by the plurality of subscriber sites (125).

33. The cable modem termination functional unit (300) of any of claims 28 to 31, wherein the at least one receiver (305) is a coaxial signal receiver configured to receive a plurality of electrical return signals generated by the plurality of subscriber sites (125).

34. The cable modem termination functional unit (300) of any of claims 28 to 33, wherein the transmitter (430) is an optical transmitter configured to transmit the digital bit stream as an optical signal on a fiber optical cable toward the headend (105).

35. The cable modem termination functional unit (300) of claim. 34, wherein the fiber optical cable also carries the transmission signal generated by the headend (105), and wherein the optical transmitter is configured to transmit the digital bit stream at a different signal wavelength than that of the transmission signal being carried by fiber optical cable.

36. The cable modem termination functional unit (300) of any of claims 28 to 35 wherein the data communication system (100) includes a headend (105) for generating a transmission signal for transmission to a plurality of subscriber sites (125) and for processing return signals from the subscriber sites (125); a plurality of distribution hubs (110) operationally coupled to said headend (105); a plurality of fiber nodes (115) operationally coupled to at least one of said distribution hubs (110); a plurality of service lines (120) operationally coupled between at least one of said fiber nodes (115) and the plurality of subscriber sites (125), wherein the hubs (110), fiber nodes (115) and services lines (120) transmit the transmission signal from the headend (105) to the plurality of subscriber sites (125) and transmit the return signals from subscriber sites (125) to the headend (105) along at least one return path; and wherein the cable modem termination functional unit (300) is operationally coupled along the least one return path to either a hub (110), a fiber node (115) or a service line (120).

## Patentansprüche

1. Datenkommunikationssystem (100), aufweisend:
ein Kopfende (105) zum Erzeugen eines Übertragungssignals zur Übertragung zu einer Vielzahl von Teilnehmerstellen (125) und zum Verarbeiten von Rücksignalen von den Teilnehmerstellen (125);
eine Vielzahl von Verteilernetzknoten (110), die mit dem Kopfende (105) wirkend gekoppelt sind;
eine Vielzahl von Faserknoten (115), die mit mindestens einem der Verteilernetzknoten (110) wirkend gekoppelt sind;
eine Vielzahl von Hausanschlussleitungen (120), die wirkend zwischen mindestens einem der Faserknoten (115) und der Vielzahl der Teilnehmerstellen (125) eingekoppelt sind, wobei die Netzknoten (110), Faserknoten (115) und Hausanschlussleitungen (120) das Übertragungssignal vom Kopfende (105) zur Vielzahl der Teilnehmerstellen (125) übertragen und die Rücksignale von den Teilnehmerstellen (125) zum Kopfende (105) entlang mindestens einer Rückleitung übertragen; und
eine Kabelmodemabschlussfunktionseinheit (300), die wirkend entlang der mindestens einen Rückleitung entweder mit einem Netzknoten (110), einem Faserknoten (115) oder einer Hausanschlussleitungen (120) gekoppelt ist, wobei die Kabelmodemabschlussfunktionseinheit (300) aufweist:
mindestens einen Empfänger (305), der dazu eingerichtet ist, eine Vielzahl von Rücksignalen zu empfangen, die von der Vielzahl der Teilnehmerstellen (125) erzeugt werden;
mindestens einen Signaldemodulator (405), der dazu eingerichtet ist, die Vielzahl der empfangenen Signale in eine gleiche Vielzahl von digitalen Basisbandsignalen zu demodulieren;
einen Zeitmultiplexerschaltung (415), die dazu eingerichtet ist, die Vielzahl der digitalen Basisbandsignale zu multiplexen, um einen seriellen digitalen Bitstrom (420) zu bilden; und
einen Sender (430), der dazu eingerichtet ist, den digitalen Bitstrom zum Kopfende (105) entlang der mindestens einen Rückleitung zu übertragen.

2. System (100) nach Anspruch 1, wobei das Übertragungssignal ein Kabelfernseh (CATV) -Signal umfasst.

3. System (100) nach Anspruch 1 oder 2, wobei die Kabelmodemabschlussfunktionseinheit (300) wirkend mit einem der Verteilernetzknoten (110) gekoppelt ist.

4. System (100) nach Anspruch 1 oder 2, wobei die Kabelmodemabschlussfunktionseinheit (300) wirkend mit einem der Faserknoten (115) gekoppelt ist.

5. System (100) nach Anspruch 1 oder 2, wobei die Kabelmodemabschlussfunktionseinheit (300) wirkend mit einer der Hausanschlussleitungen (120) gekoppelt ist.

6. System (100) nach einem der vorhergehenden Ansprüche, wobei das Kopfende (105), die Netzknoten (110) und die Faserknoten (115) durch Faseroptikkabel miteinander wirkend gekoppelt sind.

7. System (100) nach einem der vorhergehenden Ansprüche, wobei die Hausanschlussleitungen (120) Koaxialkabel sind, so dass die Faserknoten (115) und die Teilnehmerstellen (125) wirkend durch Koaxialkabel gekoppelt sind.

8. System (100) nach einem der vorhergehenden Ansprüche, wobei eine Vielzahl von Kabelmodemabschlussfunktionseinheiten (300) vorgesehen ist, und zwar mit mindestens einer Einheit vorgesehen entlang jeder aus der Vielzahl von Rückleitungen von der Vielzahl von Teilnehmerstellen (125) zum Kopfende (105).

9. System (100) nach einem der vorhergehenden Ansprüche, ferner umfassend einen Pulsecodemodulator (425) zum Modulieren des seriellen Bitstroms vor der Übertragung durch den Sender (430).

10. System (100) nach einem der vorhergehenden Ansprüche, ferner umfassend eine Wellenlängenmultiplexerschaltung (435) zum Mischen des seriellen Bitstroms vor der Übertragung durch den Sender (430).

11. System (100) nach einem der vorhergehenden Ansprüche, wobei der mindestens eine Empfänger (305) ein optischer Empfänger ist, der dazu eingerichtet ist, eine Vielzahl von optische Rücksignalen zu empfangen, die durch die Vielzahl der Teilnehmerstellen (125) erzeugt werden.

12. System (100) nach einem der Ansprüche 1 - 10, wobei der mindestens eine Empfänger (305) ein Koaxialsignalempfänger ist, der dazu eingerichtet ist, eine Vielzahl von elektrischen Rücksignalen zu empfangen, die durch die Vielzahl der Teilnehmerstellen (125) erzeugt werden.

13. System (100) nach einem der vorhergehenden Ansprüche, wobei der Sender (430) ein optischer Sender ist, der dazu eingerichtet ist, eine den digitalen Bitstrom als ein optisches Signal auf einem Faseroptikkabel zum Kopfende (105) zu übertragen.

14. System (100) nach Anspruch 13, wobei das Faseroptikkabel auch das Übertragungssignal trägt, das durch das Kopfende (105) erzeugt wird, und wobei der optische Sender dazu eingerichtet Ist, den digitalen Bitstrom bei einer anderen Signalwellenlänge zu übertragen als der des Übertragungssignals, das vom Faseroptikkabel getragen wird.

15. Verfahren (400) zur Verwendung durch eine Kabelmodemabschlussfunktionseinheit (300) in einem Datenkommunikationssystem (100) mit einem Kopfende (105) zum Erzeugen eines Übertragungssignals zur Übertragung zu einer Vielzahl von Teilnehmerstellen (125) und zum Verarbeiten von Rücksignalen von den Teilnehmerstellen (125); einer Vielzahl von Verteilernetzknoten (110), die mit dem Kopfende (105) wirkend gekoppelt sind; einer Vielzahl von Faserknoten (115), die mit mindestens einem der Verteilernetzknoten (110) wirkend gekoppelt sind; einer Vielzahl von Hausanschlussleitungen (120), die wirkend zwischen mindestens einem der Faserknoten (115) und der Vielzahl der Teilnehmerstellen (125) eingekoppelt sind, wobei die Netzknoten (110), die Faserknoten (115) und die Hausanschlussleitungen (120) das Übertragungssignal vom Kopfende (105) zur Vielzahl der Teilnehmerstellen (125) übertragen und die Rücksignale von den Teilnehmerstellen (125) zum Kopfende (105) entlang mindestens einer Rückleitung übertragen; wobei das Verfahren aufweist:
Empfangen (401) einer Vielzahl von Rücksignalen, die von der Vielzahl der Teilnehmerstellen (125) erzeugt werden;
Demodulieren (405) der Vielzahl der Rücksignale in eine gleiche Vielzahl von digitalen Basisbandsignalen;
Zeitmultiplexen (415) der Vielzahl der digitalen Basisbandsignale, um einen seriellen digitalen Bitstrom (420) zu bilden; und
Übertragen (430) des digitalen Bitstroms (420) zum Kopfende (105) entlang der mindestens einen Rückleitung.

16. Verfahren (400) nach Anspruch 15, ferner umfassend den anfänglichen Schritt des Übertragens eines ein Kabelfernseh (CATV) -Signals vom Kopfende (105) zu den Teilnehmerstellen (125).

17. Verfahren (400) nach Anspruch 15 oder 16, wobei die Kabelmodemabschlussfunktionseinheit (300) wirkend mit einem der Verteilernetzknoten (110) gekoppelt ist, und wobei der Schritt des Übertragens des digitalen Bitstroms (420) zum Kopfende (105) entlang der mindestens einen Rückleitung durchgeführt wird, um den Bitstrom (420) vom Verteilernetzknoten (110) zum Kopfende (105) zu übertragen.

18. Verfahren (400) nach Anspruch 15 oder 16, wobei die Kabelmodemabschlussfunktionseinheit (300) wirkend mit einem der Faserknoten (115) gekoppelt ist, und wobei der Schritt des Übertragens des digitalen Bitstroms (420) zum Kopfende (105) entlang der mindestens einen Rückleitung durchgeführt wird, um den Bitstrom (420) vom Faserknoten (115) zu einem entsprechenden Verteilerkopf (110) zu übertragen.

19. Verfahren (400) nach Anspruch 15 oder 16, wobei die Kabelmodemabschlussfunktionseinheit (300) wirkend mit einer der Hausanschlussleitungen (120) gekoppelt ist und wobei der Schritt des Übertragens des digitalen Bitstroms (420) zum Kopfende (105) entlang der mindestens einen Rückleitung durchgeführt wird, um den Bitstrom (420) von der Hausanschlussleitung (120) zu einem entsprechenden Faserknoten (115) zu übertragen.

20. Verfahren (400) nach einem der Ansprüche 15 bis 19, wobei das Kopfende (105), die Netzknoten (110) und die Faserknoten (115) durch Faseroptikkabel miteinander wirkend gekoppelt sind und wobei der Schritt des Übertragens des digitalen Bitstroms (420) zum Kopfende (105) durchgeführt wird, um den digitalen Bitstrom als ein optisches Signal auf den Faseroptikkabeln zu übertragen.

21. Verfahren (400) nach einem der Ansprüche 15 bis 20, wobei die Hausanschlussleitungen (120) Koaxialkabel sind, so dass die Faserknoten (115) und die Teilnehmerstellen (125) wirkend durch Koaxialkabel gekoppelt sind, und wobei der Schritt des Empfangens einer Vielzahl von Rücksignalen, die durch die Vielzahl der Teilnehmerstellen erzeugt werden, durchgeführt wird, um die Signale über das Koaxialkabel zu empfangen.

22. Verfahren (400) nach einem der Ansprüche 15 bis 21, ferner umfassend den Schritt eines Pulsekodemodulierens (425) des seriellen Bitstroms vor dem Schritt des Übertragens (430) eines digitalen Bitstroms (420) zum Kopfende (105).

23. Verfahren (400) nach einem der Ansprüche 15 bis 22, ferner umfassend den Schritt eines Wellenlängenmultiplexens (435) zum Mischen des seriellen Bitstroms vor dem Schritt des Übertragens (430) des digitalen Bitstroms (420) zum Kopfende (105).

24. Verfahren (400) nach einem der Ansprüche 15 bis 23, wobei der mindestens eine Empfänger (305) ein optischer Empfänger ist, und wobei der Schritt des Empfangens (401) der Vielzahl von Rücksignalen durchgeführt wird, um eine Vielzahl von optischen Rücksignalen zu empfangen, die durch die Vielzahl der Teilnehmerstellen (125) erzeugt werden.

25. Verfahren (400) nach einem der Ansprüche 15 bis 23, wobei der mindestens eine Empfänger (305) ein Koaxialempfänger ist, und wobei der Schritt des Empfangens (401) der Vielzahl von Rücksignalen durchgeführt wird, um eine Vielzahl von elektrischen Rücksignalen zu empfangen, die durch die Vielzahl der Teilnehmerstellen (125) erzeugt werden.

26. Verfahren (400) nach einem der Ansprüche 15 bis 25, wobei der Sender (430) ein optischer Sender ist, und wobei der Schritt des Übertragens (430) des digitalen Bitstroms (420) zum Kopfende (105) durchgeführt wird, um den digitalen Bitstrom als ein optisches Signal auf einem Faseroptikkabel zum Kopfende (105) zu übertragen.

27. Verfahren (400) nach Anspruch 26, wobei das Faseroptikkabel auch das Übertragungssignal trägt, das durch das Kopfende (105) erzeugt wird, und wobei der Schritt des Übertragens (430) des digitalen Bitstroms (420) zum Kopfende (105) durchgeführt wird, um den digitalen Bitstrom bei einer anderen Signalwellenlänge zu übertragen als der des Übertragungssignals, das vom Faseroptikkabel getragen wird.

28. Kabelmodemabschlussfunktionseinheit (300) zur Verwendung mit einem Datenkommunikationssystem (100), das ein Kopfende (105) und eine Vielzahl von Teilnehmerstellen (125) zusammenschaltet, wobei die Kabelmodemabschlussfunktionseinheit (300) wirkend entlang von Rückleitungen zwischen dem Kopfende (105) und der Vielzahl von Teilnehmerstellen (125) eingekoppelt ist, wobei die Kabelmodemabschlussfunktionseinheit (300) aufweist:
mindestens einen Empfänger (305), der dazu eingerichtet ist, eine Vielzahl von Rücksignalen zu empfangen, die durch die Vielzahl der Teilnehmerstellen (125) erzeugt werden;
mindestens einen Signaldemodulator (405), der dazu eingerichtet ist, die Vielzahl der empfangenen Signale in eine gleiche Vielzahl von digitalen Basisbandsignalen zu demodulieren;
einen Zeitmultiplexschaltung (415), die dazu eingerichtet ist, die Vielzahl der digitalen Basisbandsignale zu multiplexen, um einen seriellen digitalen Bitstrom (420) zu bilden; und
einen Sender (430), der dazu eingerichtet ist, den digitalen Bitstrom zum Kopfende (105) entlang der mindestens einen Rückleitung zu übertragen.

29. Kabelmodemabschlussfunktionseinheit (300) nach Anspruch 28, wobei eine Vielzahl von Kabelmodemabschlussfunktionseinheit (300) vorgesehen ist, und zwar vorgesehen mit mindestens einer Einheit entlang jeder der Vielzahl von Rückleitungen von der Vielzahl von Teilnehmerstellen (125) zum Kopfende (105).

30. Kabelmodemabschlussfunktionseinheit (300) nach Anspruch 28 oder 29, ferner umfassend einen Pulsecodemodulator (425) zum Modulieren des seriellen Bitstroms vor einer Übertragung durch den Sender (430).

31. Kabelmodemabschlussfunktionseinheit (300) nach einem der Ansprüche 28 bis 30, ferner umfassend eine Wellenlängenmultiplexerschaltung (435) zum Mischen des seriellen Bitstroms vor einer Übertragung durch den Sender (430).

32. Kabelmodemabschlussfunktionseinheit (300) nach einem der Ansprüche 28 bis 31, wobei der mindestens eine Empfänger (305) ein optischer Empfänger ist, der dazu eingerichtet ist, eine Vielzahl von optischen Rücksignalen zu empfangen, die durch die Vielzahl der Teilnehmerstellen (125) erzeugt werden.

33. Kabelmodemabschlussfunktionseinheit (300) nach einem der Ansprüche 28 bis 31, wobei der mindestens eine Empfänger (305) ein Koaxialsignalempfänger ist, der dazu eingerichtet ist, eine Vielzahl von elektrischen Rücksignalen zu empfangen, die durch die Vielzahl der Teilnehmerstellen (125) erzeugt werden.

34. Kabelmodemabschlussfunktionseinheit (300) nach einem der Ansprüche 28 bis 33, wobei der Sender (430) ein optischer Sender ist, der dazu eingerichtet ist, eine den digitalen Bitstrom als ein optisches Signal auf einem Faseroptikkabel zum Kopfende (105) zu übertragen.

35. Kabelmodemabschlussfunktionseinheit (300) nach Anspruch 34, wobei das Faseroptikkabel auch das Übertragungssignal trägt, das durch das Kopfende (105) erzeugt wird, und wobei der optische Sender dazu eingerichtet ist, den digitalen Bitstrom bei einer anderen Wellenlänge zu übertragen als der des Übertragungssignals, das vom Faseroptikkabel getragen wird.

36. Kabelmodemabschlussfunktionseinheit (300) nach einem der Ansprüche 28 bis 35, wobei das Datenkommunikationssystem (100), umfasst: ein Kopfende (105) zum Erzeugen eines Übertragungssignals zur Übertragung zu einer Vielzahl von Teilnehmerstellen (125) und zum Verarbeiten von Rücksignalen von den Teilnehmerstellen (125); eine Vielzahl von Verteilernetzknoten (110), die mit dem Kopfende (105) wirkend gekoppelt sind; eine Vielzahl von Faserknoten (115), die mit mindestens einem der Verteilernetzknoten (110) wirkend gekoppelt sind; eine Vielzahl von Hausanschlussleitungen (120), die wirkend zwischen mindestens einem der Faserknoten (115) und der Vielzahl der Teilnehmerstellen (125) eingekoppelt sind, wobei die Netzknoten (110), Faserknoten (115) und Hausanschlussleitungen (120) das Übertragungssignal vom Kopfende (105) zur Vielzahl der Teilnehmerstellen (125) übertragen und die Rücksignale von den Teilnehmerstellen (125) zum Kopfende (105) entlang mindestens einer Rückleitung übertragen; und wobei die Kabelmodemabschlussfunktionseinheit (300) wirkend entlang der mindestens einen Rückleitung entweder mit einem Netzknoten (110), einem Faserknoten (115) oder einer Hausanschlussleitungen (120) gekoppelt ist.

## Revendications

1. Système de communication de données (100) comprenant :
une tête de réseau (105) pour générer un signal de transmission pour une transmission à une pluralité de sites d'abonnés (125) et pour traiter les signaux de retour des sites d'abonnés (125) ;
une pluralité de pivots de distribution (110) opérationnellement couplés à ladite tête de réseau (105) ;
une pluralité de noeuds optiques (115) opérationnellement couplés à au moins l'un d'un desdits pivots de distribution (110) ;
une pluralité de lignes de desserte (120) opérationnellement couplées entre au moins l'un desdits noeuds optiques (115) et la pluralité de sites d'abonnés (125), dans lequel les pivots (110), les noeuds optiques (115) et les lignes de desserte (120) transmettent le signal de transmission de la tête de réseau (105) à la pluralité de sites d'abonnés (125) et transmettent les signaux de retour des sites d'abonnés (125) à la tête de réseau (105) sur au moins une voie de retour ; et
une unité fonctionnelle de terminaison de modem câble (300) opérationnellement couplée sur l'au moins une voie de retour à un pivot (110), un noeud optique (115) ou une ligne de desserte (120), l'unité fonctionnelle de terminaison de modem câble (300) comprenant
au moins un récepteur (305) configuré de manière à recevoir une pluralité de signaux de retour générés par la pluralité de sites d'abonnés (125) ;
au moins un démodulateur de signaux (405) configuré de manière à démoduler la pluralité de signaux reçus en une pluralité égale de signaux numériques de bande de base ;
un circuit de multiplexeur à répartition temporelle (415) configuré de manière à multiplexer la pluralité de signaux numériques de bande de base pour former un train de bits numériques série (420) ; et
un transmetteur (430) configuré de manière à transmettre le train de bits numériques vers la tête de réseau (105) sur l'au moins une voie de retour.

2. Système (100) selon la revendication 1, dans lequel ledit signal de transmission inclut un signal de télévision par câble (CATV).

3. Système (100) selon la revendication 1 ou 2, dans lequel ladite unité fonctionnelle de terminaison de modem câble (300) est opérationnellement couplée à l'un desdits pivots de distribution (110).

4. Système (100) selon la revendication 1 ou 2, dans lequel ladite unité fonctionnelle de terminaison de modem câble (300) est opérationnellement couplée à l'un desdits noeuds optiques (115).

5. Système (100) selon la revendication 1 ou 2, dans lequel ladite unité fonctionnelle de terminaison de modem câble (300) est opérationnellement couplée à l'une desdites lignes de desserte (120).

6. Système (100) selon l'une quelconque des revendications précédentes, dans lequel ladite tête de réseau (105), lesdits pivots (110) et lesdits noeuds optiques (115) sont opérationnellement couplés les uns avec les autres par des câbles à fibre optique.

7. Système (100) selon l'une quelconque des revendications précédentes, dans lequel lesdites lignes de desserte (120) sont des câbles coaxiaux de sorte que les noeuds optiques (115) et les sites d'abonnés (125) sont opérationnellement couplés par câbles coaxiaux.

8. Système (100) selon l'une quelconque des revendications précédentes, dans lequel une pluralité d'unités fonctionnelles de terminaison de modem câble (300) sont prévues, avec au moins une unité prévue sur chacune d'une pluralité de voies de retour de la pluralité de sites d'abonnés (125) à la tête de réseau (105).

9. Système (100) selon l'une quelconque des revendications précédentes, incluant en outre un modulateur par impulsions codées (425) pour moduler le train de bits série avant la transmission via le transmetteur (430).

10. Système (100) selon l'une quelconque des revendications précédentes, incluant en outre un circuit de multiplexeur en longueur d'onde (435) pour mélanger le train de bits série avant la transmission via le transmetteur (430).

11. Système (100) selon l'une quelconque des revendications précédentes, dans lequel l'au moins un récepteur (305) est un récepteur optique configuré de manière à recevoir une pluralité de signaux de retour optiques générés par la pluralité de sites d'abonnés (125).

12. Système (100) selon l'une quelconque des revendications 1 à 10 dans lequel l'au moins un récepteur (305) est un récepteur de signaux coaxial configuré de manière à recevoir une pluralité de signaux de retour électriques générés par la pluralité de sites d'abonnés (125).

13. Système (100) selon l'une quelconque des revendications précédentes, dans lequel le transmetteur (430) est un transmetteur optique configuré de manière à transmettre le train de bits numériques sous la forme d'un signal optique sur un câble de fibre optique vers la tête de réseau (105).

14. Système (100) selon la revendication 13, dans lequel le câble de fibre optique transporte également le signal de transmission généré par la tête de réseau (105), et dans lequel le transmetteur optique est configuré de manière à transmettre le train de bits numériques à une longueur d'onde de signal différente de celle du signal de transmission transporté par le câble de fibre optique.

15. Procédé (400) destiné à une utilisation par une unité fonctionnelle de terminaison de modem câble (300) dans un système de communication de données (100) ayant une tête de réseau (105) pour générer un signal de transmission pour une transmission à une pluralité de sites d'abonnés (125) et pour traiter les signaux de retour des sites d'abonnés (125), une pluralité de pivots de distribution (110) opérationnellement couplés à ladite tête de réseau (105), une pluralité de noeuds optiques (115) opérationnellement couplés à au moins l'un desdits pivots de distribution (110), une pluralité de lignes de desserte (120) opérationnellement couplées entre au moins l'un desdits noeuds optiques (115) et la pluralité de sites d'abonnés (125), dans lequel les pivots (110), les noeuds optiques (115) et les lignes de desserte (120) transmettent le signal de transmission de la tête de réseau (105) à la pluralité de sites d'abonnés (125) et transmettent les signaux de retour des sites d'abonnés (125) à la tête de réseau (105) sur au moins une voie de retour, ledit procédé comprenant de :
recevoir (401) une pluralité de signaux de retour générés par la pluralité de sites d'abonnés (125) ;
démoduler (405) la pluralité de signaux reçus en une pluralité égale de signaux numériques de bande de base ;
multiplexer en répartition temporelle (415) la pluralité égale de signaux numériques de bande de base pour former un train de bits numériques série (420) ; et
transmettre (430) le train de bits numériques (420) vers la tête de réseau (105) sur l'au moins une voie de retour.

16. Procédé (400) selon la revendication 15, comprenant en outre l'étape initiale de transmettre un signal de télévision par câble (CATV) de la tête de réseau (105) aux sites d'abonnés (125).

17. Procédé (400) selon la revendication 15 ou 16, dans lequel ladite unité fonctionnelle de terminaison de modem câble (300) est opérationnellement couplée à l'un desdits pivots de distribution (110), et dans lequel l'étape de transmission du train de bits numériques (420) vers la tête de réseau (105) sur l'au moins une voie de retour est effectuée pour transmettre le train de bits (420) du pivot de distribution (110) à la tête de réseau (105).

18. Procédé (400) selon la revendication 15 ou 16, dans lequel ladite unité fonctionnelle de terminaison de modem câble (300) est opérationnellement couplée à l'un desdits noeuds optiques (115), et dans lequel l'étape de transmission du train de bits numériques (420) vers la tête de réseau (105) sur l'au moins une voie de retour est effectuée pour transmettre le train de bits (420) du noeud optique (115) à une tête de distribution (110).

19. Procédé (400) selon la revendication 15 ou 16, dans lequel ladite unité fonctionnelle de terminaison de modem câble (300) est opérationnellement couplée à l'une desdites lignes de desserte (120), et dans lequel l'étape de transmission du train de bits numériques (420) vers la tête de réseau (105) sur l'au moins une voie de retour est effectuée pour transmettre le train de bits (420) de la ligne de desserte (120) à un noeud optique (115) correspondant.

20. Procédé (400) selon l'une quelconque des revendications 15 à 19, dans lequel ladite tête de réseau (105), lesdits pivots (110) et lesdits noeuds optiques (115) sont opérationnellement couplés les uns avec les autres par des câbles de fibre optique, et dans lequel l'étape de transmission du train de bits numériques (420) vers la tête de réseau (105) est effectuée pour transmettre le train de bits sous la forme d'un signal optique sur les câbles de fibre optique.

21. Procédé (400) selon l'une quelconque des revendications 15 à 20, dans lequel lesdites lignes de desserte (120) sont des câbles coaxiaux de telle manière que les noeuds optiques (115) et les sites d'abonnés (125) sont opérationnellement couplés par des câbles coaxiaux, et dans lequel l'étape de réception d'une pluralité de signaux de retour générés par la pluralité de sites d'abonnés est effectuée pour recevoir les signaux sur les câbles coaxiaux.

22. Procédé (400) selon l'une quelconque des revendications 15 à 21, incluant en outre l'étape de moduler par impulsions codées (425) le train de bits série avant l'étape de transmission (430) du train de bits numériques (420) vers la tête de réseau (105).

23. Procédé (400) selon l'une quelconque des revendications 15 à 22, incluant en outre l'étape de mélanger en longueur d'onde le train de bits série avant l'étape de transmission (430) du train de bits numériques (420) vers la tête de réseau (105).

24. Procédé (400) selon l'une quelconque des revendications 15 à 23, dans lequel l'au moins un récepteur (305) est un récepteur optique, et dans lequel l'étape de réception (401) de la pluralité de signaux de retour est effectuée pour recevoir une pluralité de signaux de retour optiques générés par la pluralité de sites d'abonnés (125).

25. Procédé (400) selon l'une quelconque des revendications 15 à 23, dans lequel l'au moins un récepteur (305) est un récepteur coaxial, et dans lequel l'étape de réception (401) de la pluralité de signaux de retour est effectuée pour recevoir une pluralité de signaux de retour électriques générés par la pluralité de sites d'abonnés (125).

26. Procédé (400) selon l'une quelconque des revendications 15 à 25, dans lequel le transmetteur (430) est un transmetteur optique, et dans lequel l'étape de transmission (430) du train de bits numériques (420) vers la tête de réseau (105) est effectuée pour transmettre le train de bits numériques sous la forme d'un signal optique sur un câble de fibre optique vers la tête de réseau (105).

27. Procédé (400) selon la revendication 26, dans lequel le câble de fibre optique transporte également le signal de transmission généré par la tête de réseau (105), et dans lequel l'étape de transmission (430) du train de bits numériques (420) vers la tête de réseau (105) est effectuée pour transmettre le train de bits numériques à une longueur d'onde de signal différente de celle du signal de transmission transporté par le câble de fibre optique.

28. Unité fonctionnelle de terminaison de modem câble (300) destinée à une utilisation avec un système de transmission de données (100) interconnectant une tête de réseau (105) et une pluralité de sites d'abonnés (125), l'unité fonctionnelle de terminaison de modem câble (300) opérationnellement couplée sur des voies de retour entre la tête de réseau (105) et la pluralité de sites d'abonnés (125), l'unité fonctionnelle de terminaison de modem câble (300) comprenant :
au moins un récepteur (305) configuré de manière à recevoir une pluralité de signaux de retour générés par la pluralité de sites d'abonnés (125) ;
au moins un démodulateur de signaux (405) configuré de manière à démoduler la pluralité de signaux reçus en une pluralité égale de signaux numériques de bande de base ;
un circuit de multiplexeur à répartition temporelle (415) configuré de manière à multiplexer la pluralité de signaux numériques de bande de base pour former un train de bits numériques série (420) ; et
un transmetteur (430) configuré de manière à transmettre le train de bits numériques vers la tête de réseau (105) sur l'au moins une voie de retour.

29. Unité fonctionnelle de terminaison de modem câble (300) selon la revendication 28, dans laquelle une pluralité d'unités fonctionnelles de terminaison de modem câble (300) sont prévues, avec au moins une unité prévue sur chacune d'une pluralité de voies de retour de la pluralité de sites d'abonnés (125) à la tête de réseau (105).

30. Unité fonctionnelle de terminaison de modem câble (300) selon la revendication 28 ou 29, incluant en outre un modulateur par impulsions codées (425) pour moduler le train de bits série avant la transmission via le transmetteur (430).

31. Unité fonctionnelle de terminaison de modem câble (300) selon l'une quelconque des revendications 28 à 30, comprenant en outre un circuit de multiplexeur en longueur d'onde (435) pour mélanger le train de bits série avant la transmission via le transmetteur (430).

32. Unité fonctionnelle de terminaison de modem câble (300) selon l'une quelconque des revendications 28 à 31, dans laquelle l'au moins un récepteur (305) est un récepteur optique configuré de manière à recevoir une pluralité de signaux de retour optiques générés par la pluralité de sites d'abonnés (125).

33. Unité fonctionnelle de terminaison de modem câble (300) selon l'une quelconque des revendications 28 à 31, dans laquelle l'au moins un récepteur (305) est un récepteur de signaux coaxial configuré de manière à recevoir une pluralité de signaux de retour électriques générés par la pluralité de sites d'abonnés (125).

34. Unité fonctionnelle de terminaison de modem câble (300) selon l'une quelconque des revendications 28 à 33, dans laquelle le transmetteur (430) est un transmetteur optique configuré de manière à transmettre le train de bits numériques sous la forme d'un signal optique sur un câble de fibre optique vers la tête de réseau (105).

35. Unité fonctionnelle de terminaison de modem câble (300) selon la revendication 34, dans laquelle le câble de fibre optique transporte également le signal de transmission généré par la tête de réseau (105), et dans laquelle le transmetteur optique est configuré de manière à transmettre le train de bits numériques à une longueur d'onde de signal différente de celle du signal de transmission transporté par le câble de fibre optique.

36. Unité fonctionnelle de terminaison de modem câble (300) selon l'une quelconque des revendications 28 à 35, dans laquelle le système de communication de données (100) inclut une tête de réseau (105) pour générer un signal de transmission pour une transmission à une pluralité de sites d'abonnés (125) et pour traiter les signaux de retour des sites d'abonnés (125) ; une pluralité de pivots de distribution (110) opérationnellement couplés à ladite tête de réseau (105) ; une pluralité de noeuds optiques (115) opérationnellement couplés à au moins l'un desdits pivots de distribution (110) ; une pluralité de lignes de desserte (120) opérationnellement couplées entre au moins l'un desdits noeuds optiques (115) et la pluralité de sites d'abonnés (125), dans laquelle les pivots (110), les noeuds optiques (115) et les lignes de desserte (120) transmettent le signal de transmission de la tête de réseau (105) à la pluralité de sites d'abonnés (125) et transmettent les signaux de retour des sites d'abonnés (125) à la tête de réseau (105) sur au moins une voie de retour ; et dans laquelle l'unité fonctionnelle de terminaison de modem câble (300) est opérationnellement couplée sur l'au moins une voie de retour à un pivot (110), à un noeud optique (115) ou à une ligne de desserte (120).
